# FASCICULE DE BREVET EUROPEEN

(11) **EP 1 122 868 B1**
(45) Date de publication et mention de la délivrance du brevet: **29.09.2010**
(21) Numéro de dépôt: 01810108.9
(22) Date de dépôt: 02.02.2001
(51) Int. Cl.: H02K 26/00, H01F 7/14

(54) **Actionneur rotatif à course limitée et à commande électrique**
Rotationssteller mit begrenzter Laufbahn und elektrischer Steuerung
Rotating actuator with limited trajectory and electric control

(30) Priorité: 04.02.2000 CH 2222000
(43) Date de publication de la demande: 08.08.2001
(73) Titulaire: Portescap Singapore Pte. Ltd., Singapore 048621 (SG)
(72) Inventeur: Ferniot, Jean-Claude, 2300 La Chaux-de-Fonds (CH)
(74) Mandataire: Reuteler, Raymond Werner

(56) Documents cités:
- GB-A- 1 478 981
- US-A- 4 470 030
- US-A- 4 644 211
- US-A- 4 660 010
- US-A- 5 703 555

## Description

La présente invention concerne un actionneur rotatif à commande électrique.

Il y a beaucoup d'applications très diverses nécessitant ou utilisant des actionneurs à commande électrique pour effectuer le déplacement à course limitée et réversible d'un organe mécanique, notamment pour des fonctions de commutation ou de commande. On peut citer, par exemple, les systèmes de verrouillage, de soupape, de clapet, d'obturateur, ou de bascule mécanique.

Il existe un besoin constant de réduire le coût, les dimensions et la consommation d'énergie électrique des actionneurs, tout en les rendant plus fiables. Pour certaines applications, il y a en outre un besoin d'actionneurs rotatifs avec les caractéristiques précitées.

Des actionneurs rotatifs à course limitée sont décrits dans les brevets américains US 4,470,030, US 4,660,110 et US 4,644,211.

Un but de la présente invention est de fournir un actionneur rotatif à course limitée et à commande électrique fiable, compacte et à faible consommation d'énergie électrique. Il serait en outre avantageux de réaliser un actionneur à faible coût, notamment en réduisant le nombre de pièces et en simplifiant la construction.

Des buts de l'invention sont réalisés par un actionneur selon la revendication 1.

L'actionneur rotatif de la présente invention comporte une bobine électrique, un circuit magnétique en un matériau magnétique ayant une bonne perméabilité magnétique, et un rotor pouvant effectuer une rotation de course limitée, le rotor comprenant un arbre, un aimant ou une partie d'aimant, et des moyens de limitation de course définissant deux positions en rotation stables, l'aimant ou la partie d'aimant étant disposé de façon que, sans courant électrique, l'aimant ou la partie d'aimant est attiré vers le circuit magnétique, de sorte que le rotor est dans une desdites positions stables, mais qu'en appliquant un courant électrique dans la bobine pour créer un champ magnétique de direction opposée au champ magnétique de l'aimant ou de la partie d'aimant, le rotor bascule à l'autre position stable.

L'actionneur peut comporter deux parties d'aimant ou deux aimants ayant des paires de pôles nord-sud orientées dans des directions essentiellement opposées, de sorte qu'en appliquant un courant dans la bobine, un champ magnétique est créé dans le circuit magnétique qui repousse l'une desdites parties d'aimant ou aimants et attire l'autre desdites parties d'aimant ou aimants, ces parties d'aimant ou aimants étant disposées, respectivement, de part et d'autre de l'arbre.

Dans la position stable, l'aimant ou la partie d'aimant est disposé, au moins partiellement, dans un entrefer du circuit magnétique, de sorte que la force d'attraction de l'aimant ou de la partie d'aimant dans l'une desdites positions stables résulte essentiellement du champ magnétique de l'aimant ou de la partie d'aimant circulant dans le circuit magnétique.

Le circuit magnétique peut être formé par une partie de circuit magnétique extérieure et une partie de circuit magnétique intérieure, la partie de circuit magnétique extérieure comportant des parties d'un boîtier dans lequel sont montés la bobine, la partie de circuit magnétique intérieure et les aimants ou parties d'aimants. La partie de circuit magnétique intérieure peut comporter un organe en un matériau magnétique ayant un manche à travers lequel passe l'arbre, et un chapeau ayant une face en regard d'une face de la partie du circuit magnétique extérieure pour former un entrefer dans lequel l'aimant peut être positionné. La bobine peut être montée autour du manche. La bobine, la partie de circuit magnétique intérieure et le boîtier font partie du stator de l'actionneur. Des paliers peuvent être montés sur le boîtier pour supporter l'arbre.

Les moyens de limitation de course peuvent comporter un flasque monté sur l'arbre et ayant deux surfaces de butée pouvant buter sur des surfaces de butée correspondantes sur le stator. Les surfaces de butée sur le stator peuvent être munies sur le boîtier, par exemple sur un capot fixé au bâti du boîtier. Le flasque peut par exemple essentiellement avoir la forme d'un triangle et peut être fixé à l'aimant.

L'actionneur peut comporter un organe aimanté en une seule pièce ayant deux desdites parties d'aimant de champ magnétique de sens opposés et disposées respectivement de part et d'autre de l'arbre, ou deux aimants dans un support, disposés de part et d'autre de l'axe et ayant des champs magnétiques de sens opposés. De préférence, les pôles nord-sud des aimants ou parties d'aimant sont essentiellement parallèles à la direction de l'arbre. En outre, les deux aimants ou deux parties d'aimant de part et d'autre de l'arbre sont disposés symétriquement par rapport aux surfaces de butée du rotor.

Le chapeau de la partie de circuit magnétique intérieure peut être constitué sous différentes formes, mais de préférence sous forme d'une partie de cône non-axisymétrique, la base de ce cône étant disposée du côté de l'entrefer.

D'autres buts et aspects avantageux de l'invention ressortiront de la description et des revendications ci-après et des dessins annexés, dans lesquels:
la Fig. 1 est une vue d'un actionneur rotatif selon l'invention;
la Fig. 2 est une coupe à travers la ligne Il-Il de la Fig. 1;
la Fig. 3 est une vue en perspective d'un actionneur selon l'invention, sans une partie du boîtier;
la Fig. 4 est une vue en perspective éclatée de l'actionneur selon l'invention;
la Fig. 5 est une vue en perspective d'un organe aimanté et d'un élément de butée du rotor de l'actionneur selon l'invention; et
la Fig. 6 est une vue en perspective d'une variante d'une partie de circuit magnétique intérieure de l'actionneur selon l'invention.

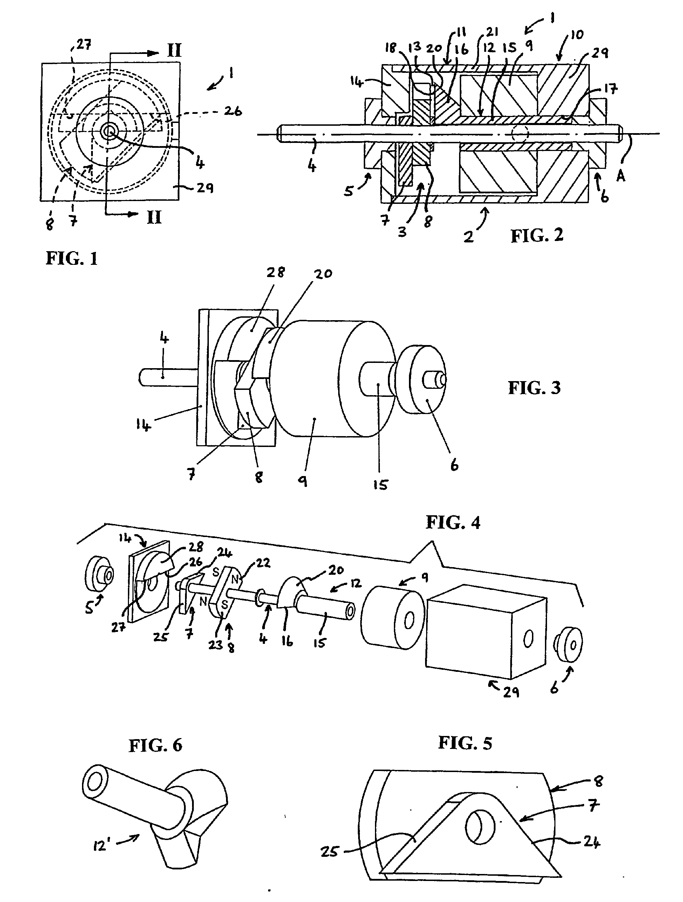

En faisant référence aux Figures 1 à 4, un actionneur rotatif 1 comporte un stator 2 et un rotor 3. Le rotor 3 comporte un arbre 4 s'étendant le long d'un axe A qui est supporté par des paliers 5, 6 du stator. Le rotor 3 comporte en outre un organe de butée 7 attaché à l'arbre, et un organe aimanté 8 fixé à l'arbre ou l'organe de butée 7.

Le stator 2 comporte une bobine 9 et un circuit magnétique 10 comprenant une partie de circuit magnétique extérieure 11 et une partie de circuit magnétique intérieure 12. Le circuit magnétique 10 est muni d'un entrefer 13 dans lequel l'organe aimanté 8 peut être positionné au moins partiellement. La partie de circuit magnétique extérieure est formée, en tout cas partiellement, par un boîtier de l'actionneur comprenant un bâti 29 dans lequel sont montées la bobine et la partie de circuit magnétique intérieure, et un capot 14 fermant le bâti. La partie de circuit magnétique intérieure 12 comporte un manche 15 munie d'un passage à travers lequel passe l'arbre 4 avec un jeu suffisant pour permettre la rotation libre de l'arbre par rapport au manche, et un chapeau 16 ayant essentiellement la forme d'une partie de cône tronqué. Le manche peut être de forme tubulaire et supporte la bobine 9. Le manche 15 peut être fixé au boîtier en le chassant dans un trou 17 correspondant du bâti.

Le chapeau 16 de la partie de circuit magnétique intérieure a une surface 18 essentiellement orthogonale à l'axe A et en regard d'une surface 19 de la partie de circuit magnétique extérieure, les surfaces 18, 19 étant espacées pour former l'entrefer 13. La surface conique 20 du chapeau 16 permet de réduire le flux magnétique partant de cette surface directement à la paroi radialement extérieure 21 du bâti, au lieu de passer à travers l'entrefer 13 et le capot 14 avant de retourner par la paroi extérieure 21 du bâti 29. En d'autres mots, en réduisant la surface du chapeau 16 à proximité du bâti 29, le champ magnétique aurait tendance à traverser l'entrefer et l'organe aimanté 8 dans l'entrefer.

L'organe aimanté 8 peut être constitué sous forme d'un organe ayant des parties d'aimant 22, 23, respectivement disposées de part et d'autre de l'arbre 4, les pôles nord-sud des parties étant orientés dans des directions opposées, mais essentiellement parallèles à la direction de l'axe A. L'organe aimanté 8 peut aussi comporter deux aimants similaires ou identiques disposés de part et d'autre de l'arbre, ces aimants par exemple étant montés sur un support. Dans la forme d'exécution montrée, l'organe aimanté 8 est un aimant plat ayant une forme oblongue et comprenant intégralement les deux parties d'aimant 22, 23. L'organe aimanté 8 est fixé à l'organe de butée 7, qui fait office de support de l'aimant sur l'arbre.

L'organe de butée 7 est muni de deux surfaces de butée 24, 25 respectivement qui viennent en butée contre les surfaces de butée 26, 27, respectivement, sur le stator, notamment sur un nez intérieur 28 du capot 14. L'organe de butée définit la course et les positions limites en rotation du rotor. Les positions limites sont des positions stables, c'est-à-dire qu'en absence de courant électrique dans la bobine 9, le rotor ne prend qu'une des deux positions stables et est maintenu dans cette position par la force magnétique de l'organe aimanté 8, disposé dans l'entrefer 13, pour le matériau magnétique du circuit magnétique. Dans les positions stables, l'une ou l'autre des parties d'aimant 22, 23, ou aimants, le cas échéant, sont attirées par la force d'attraction magnétique dans l'entrefer 13 du circuit magnétique, de sorte que les lignes de champ magnétique circulent dans le circuit magnétique et la partie de l'aimant dans l'entrefer ou à proximité du circuit magnétique.

Pour actionner le rotor en rotation d'une position stable à l'autre position stable, un courant électrique est appliqué à la bobine 9 pour créer un champ magnétique de direction opposée au champ magnétique de la partie d'aimant dans l'entrefer, entraînant une force de répulsion de cette partie d'aimant et une force d'attraction de l'autre partie d'aimant envers le circuit magnétique et notamment l'entrefer 13. Le couple ainsi généré fait basculer le rotor à l'autre position stable. Pour changer de nouveau de position stable, un courant électrique est appliqué à la bobine 9 dans une direction opposée à la direction du courant précédent, de façon à créer un champ magnétique de direction opposée au champ magnétique de l'autre partie d'aimant. Le courant électrique peut être appliqué très brièvement, c'est-à-dire que l'on peut appliquer un courant impulsionnel pour l'actionnement de commutation du rotor d'une position stable à l'autre, réduisant ainsi le besoin en énergie électrique de l'actionneur.

Dans la Fig. 6, une variante d'une partie du circuit magnétique intérieure 12' est illustrée selon laquelle la matière magnétique du chapeau 16' est enlevée en regard de la position d'une partie de l'aimant opposée à la partie de l'aimant se trouvant dans l'entrefer dans les deux positions stables.

Dans la forme d'exécution décrite ci-dessus, une partie de l'aimant se positionne dans l'entrefer du circuit magnétique dans sa position stable, mais il est aussi possible de ne pas avoir un entrefer ou d'avoir un entrefer partiel et que la partie d'aimant dans l'une des positions stables est à proximité du circuit magnétique, de sorte que le flux magnétique de cette partie d'aimant circulent dans le circuit magnétique et le champ magnétique opposé crée par un courant dans la bobine 9 résulte en une force de répulsion sur cette partie de l'aimant à proximité du circuit magnétique.

Avantageusement, un actionneur rotatif simple, fiable et à faible consommation d'énergie est réalisé.

## Revendications

1. Actionneur rotatif (1) à course limitée et à commande électrique comportant une bobine électrique (9), un circuit magnétique (10) en un matériau magnétique comportant un entrefer (13), et un rotor (3) pouvant effectuer une rotation de course limitée autour d'un axe de rotation (A) s'étendant dans une direction axiale, le rotor comprenant un arbre (4), un organe aimanté (8) comportant deux parties d'aimant (22, 23) ou deux aimants ayant les paires de pôles nord-sud orientées dans des directions essentiellement opposées, et disposés de part et d'autre de l'arbre, et des moyens de limitation de course (7, 24, 25, 14, 26, 27) définissant deux positions en rotation stables, **caractérisé en ce qu'**en l'absence de courant électrique, l'organe aimanté (8) est disposé de façon qu'unaimant ou une partie d'aimant est attirée et positionnée dans l'entrefer (13), de sorte que le rotor (3) est dans l'une desdites positions stables, mais qu'en appliquant un courant électrique dans la bobine (9) pour créer un champ magnétique de direction opposée au champ magnétique de l'aimant ou de la partie d'aimant dans l'entrefer, entraînant une force de répulsion de cette partie d'aimant ou aimant et une force d'attraction de l'autre partie d'aimant ou aimant vers l'entrefer, le rotor bascule à l'autre desdites positions stables.

2. Actionneur selon la revendication 1, **caractérisé en ce que** le circuit magnétique (10) comporte une partie de circuit magnétique extérieure (11) et une partie de circuit magnétique intérieure (12), la partie de circuit magnétique extérieure (11) étant constituée en partie par des éléments de boîtier (14, 29) de l'actionneur dans lequel sont montés la bobine (9), la partie de circuit magnétique intérieure (12) et la partie d'aimant ou aimants.

3. Actionneur selon la revendication 2, **caractérisé en ce que** le boîtier de l'actionneur comporte un bâti (29) et un capot (14) fermant le bâti, la partie de circuit magnétique extérieure (11) étant constituée par une partie du bâti (29) et du capot (14).

4. Actionneur selon l'une des revendications précédentes, **caractérisé en ce que** la partie de circuit magnétique intérieure (12) comporte un manche (15) à travers lequel passe l'arbre (4), le manche traversant la bobine (9).

5. Actionneur selon la revendication 4, **caractérisé en ce que** la partie de circuit magnétique intérieure (12) comporte un chapeau (16) essentiellement sous forme d'une partie de cône tronqué, une surface de base (18) du chapeau formant un des côtés de l'entrefer (13).

## Claims

1. A rotary actuator (1) with limited travel and electric control, including an electric coil (9), a magnetic circuit (10) in a magnetic material including an air gap (13), and a rotor (3) which may perform a rotation with limited travel around an axis of rotation (A) extending in an axial direction, the rotor comprising a shaft (4), a magnetized member (8) including two magnet portions (22, 23) or two magnets having pairs of North-South poles oriented in essentially opposite directions, and positioned on either side of the shaft, and means for limiting travel (7, 24, 25, 14, 26, 27) defining two stable positions in rotation, **characterized in that** in the absence of electric current, the magnetized member (8) is positioned so that a magnet or a magnet portion is attracted and positioned in the air gap (13), so that the rotor (3) is in one of said stable positions, but by applying an electric current in the coil (9) in order to generate a magnetic field in a direction opposite to the magnetic field of the magnet or of the magnet portion in the air gap, causing a repulsive force from this magnet portion or magnet and an attractive force from the other magnet portion or magnet towards the air gap, the rotor switches to the other one of said stable positions.

2. The actuator according to claim 1, **characterized in that** the magnetic circuit (10) includes an outer magnetic circuit portion (11) and an inner magnetic circuit portion (12), the outer magnetic circuit portion (11) partly formed by casing elements (14, 29) of the actuator in which are mounted the coil (9), the inner magnetic circuit portion (12) and the magnet portion or magnets.

3. The actuator according to claim 2, **characterized in that** the casing of the actuator includes a frame (29) and a cover (14) closing the frame, the outer magnetic circuit portion (11) being formed by a portion of the frame (29) and of the cover (14).

4. The actuator according to any of the preceding claims, **characterized in that** the inner magnetic circuit portion (12) includes a sleeve (15) through which the shaft (4) passes, the sleeve passing through the coil (9).

5. The actuator according to claim 4, **characterized in that** the inner magnetic circuit portion (12) includes a cap (16) essentially as a frusto-conical portion, a base surface (18) of the cap forming one of the sides of the air gap (13).

## Patentansprüche

1. Rotationssteller (1) mit begrenzter Laufbahn und elektrischer Steuerung, umfassend eine elektrische Spule (9), einen magnetischen Kreis (10) aus einem magnetischen Material, umfassend einen Luftspalt (13) und einen Rotor (3), der eine Drehung mit begrenzter Laufbahn um eine Drehachse (A) durchführen kann, die sich in einer axialen Richtung erstreckt, wobei der Rotor eine Welle (4) umfasst, ein Magnetorgan (8), umfassend zwei Magnetteile (22, 23) oder zwei Magnete, deren Polpaare Nord-Süd in im Wesentlichen entgegengesetzten Richtungen ausgerichtet sind, und die auf beiden Seiten der Welle angebracht sind, und Mittel zur Begrenzung der Laufbahn (7, 24, 25, 14, 26, 27), die zwei stabile Drehpositionen definieren, **dadurch gekennzeichnet, dass** bei Abwesenheit von elektrischem Strom das Magnetorgan (8) so angebracht ist, dass ein Magnet oder ein Teil eines Magneten angezogen und im Luftspalt (13) positioniert wird, so dass sich der Rotor (3) in einer der stabilen Positionen befindet, jedoch der Rotor beim Anlegen eines elektrischen Stroms in der Spule (9), um ein Magnetfeld mit einer Richtung, die dem Magnetfeld des Magneten oder des Magnetteils im Luftspalt entgegensteht, zu erzeugen, das eine abstoßende Kraft dieses Magnetteils oder Magneten und eine anziehende Kraft des anderen Magnetteils oder Magneten hin zum Luftspalt erzeugt, in die andere der stabilen Positionen kippt.

2. Steller nach Anspruch 1, **dadurch gekennzeichnet, dass** der magnetische Kreis (10) einen Teil des äußeren magnetischen Kreises (11) und einen Teil des inneren magnetischen Kreises (12) umfasst, wobei der Teil des äußeren magnetischen Kreises (11) teilweise aus Elementen des Gehäuses (14, 19) des Stellers gebildet ist, in dem die Spule (9), der Teil des inneren magnetischen Kreises (12) und der Magnetteil oder die Magnete montiert sind.

3. Steller nach Anspruch 2, **dadurch gekennzeichnet, dass** das Gehäuse des Stellers einen Rahmen (29) und eine Haube (14) umfasst, die den Rahmen schließt, wobei der Teil des äußeren magnetischen Kreises (11 durch einen Teil des Rahmens (29) und der Haube (14) gebildet ist.

4. Steller nach einem der vorhergehenden Ansprüche, **dadurch gekennzeichnet, dass** der Teil des inneren magnetischen Kreises (12) einen Schlauch (15) umfasst, durch den die Welle (4) verläuft, wobei der Schlauch die Spule (9) durchquert.

5. Steller nach Anspruch 4, **dadurch gekennzeichnet, dass** der Teil des inneren magnetischen Kreises (12) eine Kappe (16) umfasst, die im Wesentlichen die Form eines Teils eines Kegelstumpfes aufweist, wobei eine Grundfläche (18) der Kappe eine der Seiten des Luftspalts bildet (13).
